(19) Europäisches Patentamt / European Patent Office / Office européen des brevets

(11) **EP 4 393 785 B1**

(12) **EUROPEAN PATENT SPECIFICATION**

(45) Date of publication and mention
of the grant of the patent:
**29.10.2025 Bulletin 2025/44**

(21) Application number: **23214947.6**

(22) Date of filing: **07.12.2023**

(51) International Patent Classification (IPC):
*B60W 30/12* (2020.01)    *B60W 30/16* (2020.01)
*B60W 50/10* (2012.01)    *B60W 50/12* (2012.01)
*B60W 60/00* (2020.01)

(52) Cooperative Patent Classification (CPC):
**B60W 30/12; B60W 30/16; B60W 50/10;**
**B60W 50/12; B60W 60/0053;** B60W 2530/20;
B60W 2552/15; B60W 2552/40; B60W 2552/53;
B60W 2555/20

(54) **DRIVING CONTROL APPARATUS FOR VEHICLE**

ANTRIEBSSTEUERUNGSVORRICHTUNG FÜR EIN FAHRZEUG

APPAREIL DE COMMANDE DE CONDUITE POUR VÉHICULE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **27.12.2022 JP 2022209817**

(43) Date of publication of application:
**03.07.2024 Bulletin 2024/27**

(73) Proprietor: **Suzuki Motor Corporation**
**Hamamatsu-shi, Shizuoka 432-8611 (JP)**

(72) Inventor: **SATO, Katsuhiko**
**HAMAMATSU-SHI, 4328611 (JP)**

(74) Representative: **Plasseraud IP**
**104 Rue de Richelieu**
**CS92104**
**75080 Paris Cedex 02 (FR)**

(56) References cited:
**EP-A1- 4 052 982    EP-A2- 3 287 334**
**GB-A- 2 578 915    US-A1- 2022 281 456**

**Description**

[Technical Field]

The present invention relates to a driving control apparatus for a vehicle, and in particular, relates to a risk minimization function while an automated lane keeping system is active.

[Background Art]

Various driving control systems are being put into practical use and being internationally standardized for purposes of reducing the burden on drivers and supporting safe driving. For example, regulations referred to as an "automated lane keeping system (ALKS)" have been developed, in which a vehicle is kept in a lane, traveling at a speed of 60 km/h or less through long-term control of the forward, backward, left, and right movements of the vehicle without requiring driver operations.

In such a driving control system, as described in Patent Literature 1, for example, when failure occurs in the system or when a driving condition of the vehicle deviates from a system limit or an operational design domain (ODD), the driver is notified of an operation takeover request, and operation shifts to manual driving by the driver, but when the driver cannot take over operation, operation shifts to a risk minimization control (MRM: Minimal Risk Maneuver). Also, if there is an operation intervention by the driver while the ALKS is active, operations by the driver take priority and operation shifts to manual driving. Patent Literatures 2 to 4 disclose driving control systems adapted to handle situations where an icy road surface is present ahead of the vehicle.

[Citation List]

[Patent Literature]

[Patent Literature 1] EP 4 052 982 A1
[Patent Literature 2] US 2022/281456 A1
[Patent Literature 3] GB 2 578 915 A
[Patent Literature 4] EP 3 287 334 A2

[Summary of Invention]

[Problem to be Solved by the Invention]

In addition, in the case in which the reason for operation design domain (ODD) deviation is an icy road, if a vehicle reaches an icy road spot during an operation takeover request, operations by the driver in response to the operation takeover request may induce vehicle behavior such as skidding or spinout. Such tendencies are particularly pronounced when a vehicle is fitted with normal tires.

The present invention was made in light of circumstances like the above, and an object thereof is to enable shifting to appropriate safety measures when an icy road is detected, in accordance with the time when the icy road spot is reached.

[Means for Solving the Problem]

To solve the problems described above, the present invention is
a driving control apparatus for a vehicle, comprising:

an environmental condition estimating part including a surrounding recognition function for recognizing a driving lane of the vehicle, neighboring lanes, other vehicles in each of the lanes, and a surrounding environment, and a function for obtaining a state of movement of the vehicle;
a path generating part for generating a target path on the basis of information obtained by the environmental condition estimating part; and
a vehicle control part configured to perform speed control and steering control for making the vehicle follow the target path,

the driving control apparatus having:

an in-lane automated driving function that performs in-lane automated driving for maintaining a set speed if no vehicle is present ahead in the lane of the vehicle and maintaining a set inter-vehicle distance if a vehicle is present ahead;

an MRM function that performs a risk minimization control, including decelerating the vehicle to a stop in the lane, when a system failure occurs while the in-lane automated driving function is active or when operation is not taken over by a driver when a system failure occurs; and

an override function that, if there is an operation intervention equal to or greater than a prescribed threshold value by the driver while the in-lane automated driving function or the MRM function is active, stops the active function and transfers control to the driver,

wherein the driving control apparatus is configured such that if an icy road on a driving path ahead of the vehicle is detected on the basis of information obtained by the environmental condition estimating part and the time to arrival at an icy road spot is less than a prescribed value, the prescribed threshold value which serves as a determination criterion for the operation intervention is set to a greater-than-normal value and the risk minimization control is performed.

[Advantageous Effects of Invention]

As above, a driving control apparatus for a vehicle according to the present invention is advantageous in that if an icy road on a driving path ahead of the vehicle is detected while the in-lane automated driving function is active and the time to arrival at an icy road spot is less than a predetermined time sufficient for avoidance or safe stopping by manual control before reaching the icy road spot, prescribed threshold values which serve as determination criteria for the operation intervention are set to values which are greater than normal to allow shifting to the risk minimization control in a state in which an override due to an operation intervention by the driver is suppressed, and the automated driving functions of the vehicle are used to decelerate the vehicle to a stop in the lane to avoid vehicle behavior such as skidding or spinout.

[Brief Description of Drawings]

[Figure 1] Figure 1 is a schematic diagram illustrating a driving control system for a vehicle.
[Figure 2] Figure 2 is a schematic plan view illustrating an external sensor group of a vehicle.
[Figure 3] Figure 3 is a block diagram illustrating a driving control system for a vehicle.
[Figure 4] Figure 4 is a flowchart illustrating control during icy road detection.
[Figure 5] Figure 5 is a diagram illustrating a shift to a risk minimization control during icy road detection.

[Mode for Carrying Out the Invention]

Hereinafter, embodiments of the present invention will be described in detail with reference to the drawings.

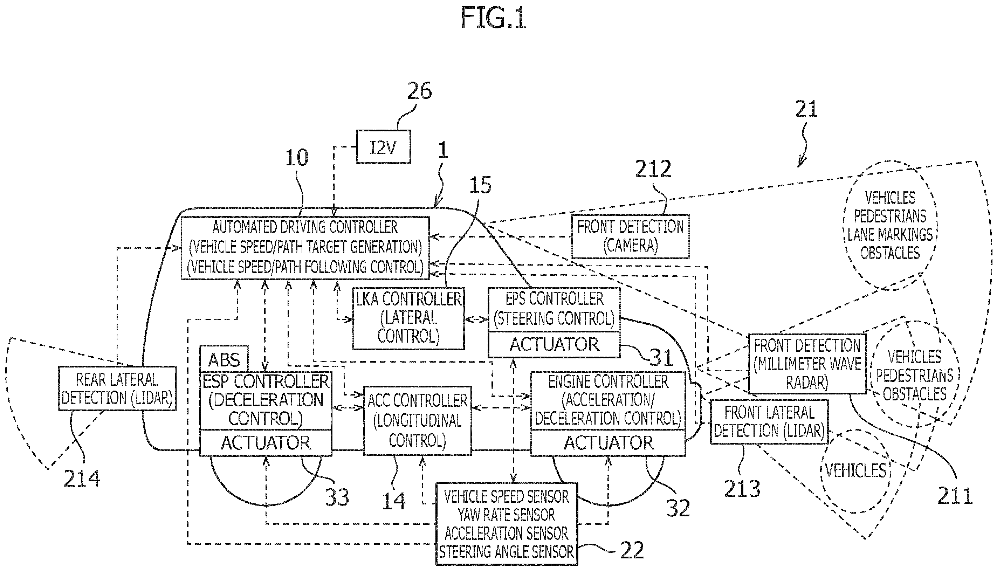

In Figure 1, a vehicle 1 equipped with a driving control system according to the present invention includes, in addition to common automobile components such as an engine and a vehicle body, an external sensor 21 for detecting a vehicle surrounding environment, an internal sensor 22 for detecting vehicle information, a controller/actuator group for speed control and steering control, an ACC controller 14 for inter-vehicle distance control, an LKA controller 15 for lane keeping control, and an automated driving controller 10 for controlling them to execute partially automated in-lane driving (PADS: Partially Automated in-lane Driving System) and automated in-single-lane driving (ALKS: Automated Lane Keeping System) in order to perform, at the vehicle side, recognition, determination, and operation conventionally performed by a driver.

The controller/actuator group for speed control and steering control includes an electric power steering (EPS) controller 31 for steering control, an engine controller 32 for acceleration/deceleration rate control, and an ESP/ABS controller 33. An ESP (Electronic Stability Program, registered trademark) includes an anti-lock braking system (ABS) to form a stability control system (vehicle behavior stabilization control system).

The external sensor 21 is composed of a plurality of detection means for inputting lane markings on a road defining the lane of the vehicle and neighboring lanes, and presence of and relative distance from other vehicles, obstacles, people, and the like around the vehicle into the automated driving controller 10 as external data such as image data or point cloud data.

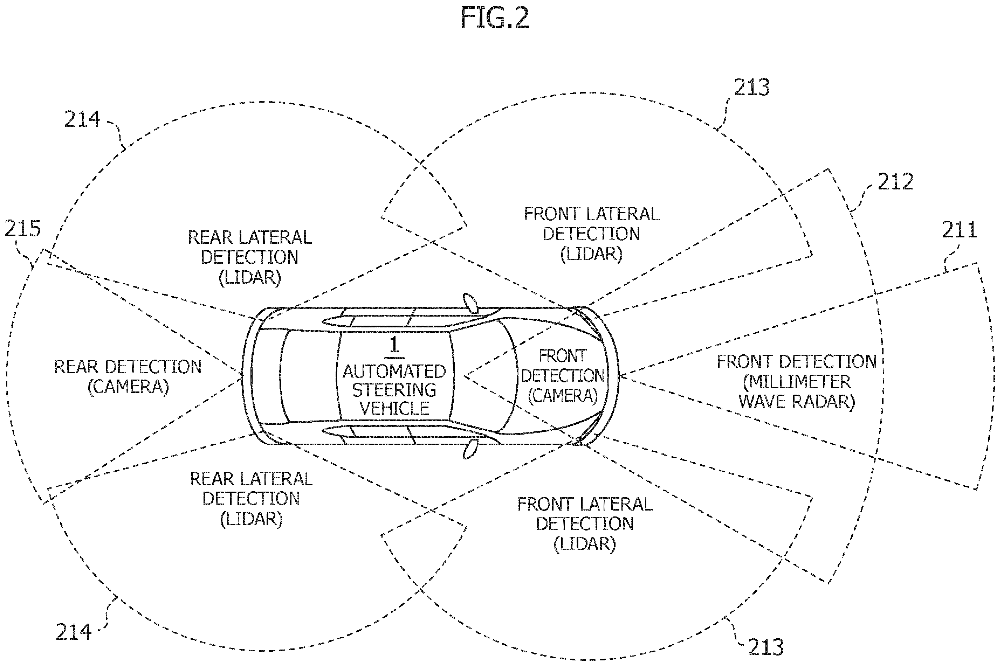

For example, as shown in Figure 2, the vehicle 1 includes a millimeter wave radar (211) and a camera (212) as front detection means 211 and 212, LIDARs (Laser Imaging Detection And Ranging) as front lateral detection means 213 and rear lateral detection means 214, and a camera (back camera) as rear detection means 215, covers 360 degrees around the vehicle, and can detect positions of and distance from vehicles, obstacles and the like, and lane marking positions in the lane in which the vehicle is driving and the neighboring lanes within a predetermined range in the front, rear, left, and right directions of the vehicle.

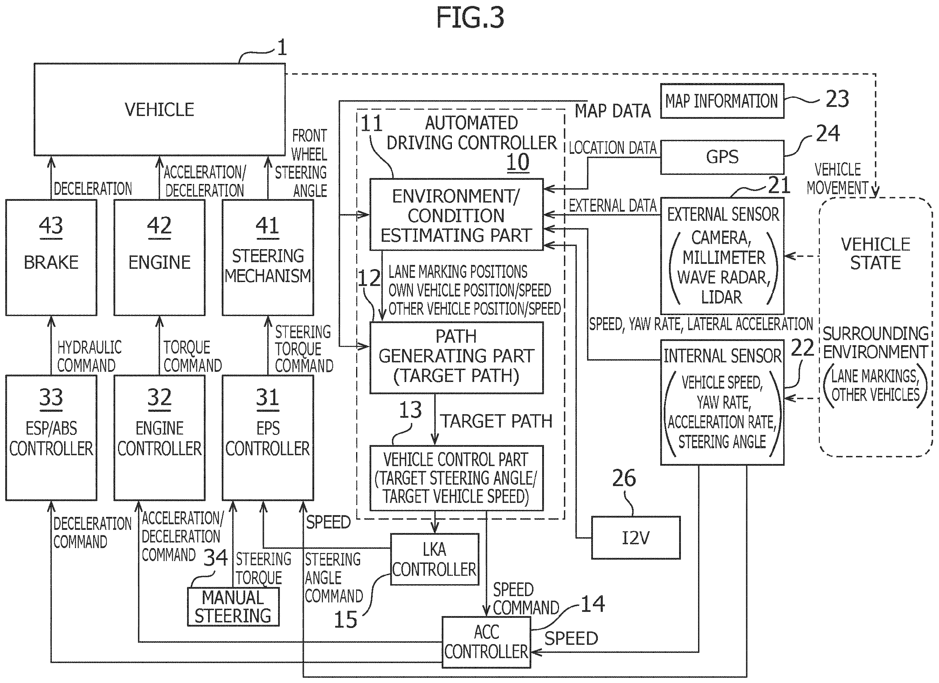

The internal sensor 22 is composed of a plurality of detection means, such as a vehicle speed sensor, a yaw rate sensor, and an acceleration sensor, for measuring physical quantities representing the moving state of the vehicle, and their measurement values are input into the automated driving controller 10, ACC controller 14, LKA controller 15, and EPS controller 31 as shown in Figure 3, and arithmetically processed together with the input from the external sensor 21.

The automated driving controller 10 includes an environmental condition estimating part 11, a path generating part 12, and a vehicle control part 13, and includes a computer for performing functions as described below, that is, ROM storing programs and data, a CPU for performing computational processing, RAM for reading out the programs and data, and storing dynamic data and computational processing results, an input/output interface, and the like.

The environmental condition estimating part 11 acquires the absolute position of the vehicle itself by matching the vehicle's position information by positioning means 24 such as a GPS and map information 23, and on the basis of the external data such as the image data and point cloud data obtained by the external sensor 21, estimates positions of lane markings of the vehicle's driving lane and the neighboring lanes, and positions and speeds of other vehicles. In addition, it acquires the state of movement of the vehicle from internal data measured by the internal sensor 22.

The path generating part 12 generates a target path to a destination from the vehicle location estimated by the environmental condition estimating part 11. The target path is a local path to a dynamic destination on a course recognized by the environmental condition estimating part 11, and is different from a global path (driving route) for path guidance to a destination in the case in which the map information 23 is implemented as a navigation device. That is, the path generating part 12 generates a target path (local path) by setting a dynamic destination on the course (lane) recognized by the environmental condition estimating part 11, but generates a target path (local path) on the basis of a global path if the global path has been set in advance. Also, even if a global path has not been set, the path generating part 12 successively determines, on the basis of the map information 23, a tentative global path "on the road" along the traveled course (lane), and generates a target path (local path) on the basis of the tentative global path. In addition, in the case of executing a lane change, it generates a target path (local path) from the vehicle location to a destination in a neighboring lane on the basis of the positions of lane markings of neighboring lanes, the positions and speeds of other vehicles, and the state of movement of the vehicle which are estimated by the environmental condition estimating part 11.

The vehicle control part 13 calculates a target vehicle speed and a target steering angle on the basis of the target path (local path) generated by the path generating part 12, transmits a speed command for constant-speed driving or inter-vehicle distance maintenance/following driving to the ACC controller 14, and transmits a steering angle command for path following to the EPS controller 31 via the LKA controller 15.

Note that the vehicle speed is also input into the EPS controller 31 and the ACC controller 14. Since the steering reaction force varies depending on the vehicle speed, the EPS controller 31 references a steering angle-steering torque map according to vehicle speed and transmits a torque command to a steering mechanism 41. By controlling an engine 42, a brake 43, and the steering mechanism 41 with the engine controller 32, the ESP/ABS controller 33, and the EPS controller 31, the movement of the vehicle 1 in the longitudinal direction and the lateral direction is controlled.

Overview of Partially Automated In-Lane Driving System

Next, an overview of the partially automated in-lane driving system (PADS) will be described.

The partially automated in-lane driving system (PADS) is a system that combines the inter-vehicle distance control system (ACCS: Adaptive Cruise Control System) and the lane keeping assistance system (LKAS), and is enabled in a state in which both ACC controller 14 included in the inter-vehicle distance control system (ACCS) and LKA controller 15 included in the lane keeping assistance system (LKAS) are operating together with the automated driving controller 10.

At the same time as operation of the partially automated in-lane driving system, the automated driving controller 10 (path generating part 12) generates a target path in a single lane and a target vehicle speed on the basis of the external information (lanes, vehicle's position, and positions and speeds of other vehicles driving in the vehicle's driving lane and the neighboring lane) obtained by the environmental condition estimating part 11 through the external sensor 21, and the internal information (vehicle speed, yaw rate, and acceleration) obtained by the internal sensor 22.

The automated driving controller 10 (vehicle control part 13) estimates the speed, attitude, and lateral displacement of the vehicle after $\Delta t$ seconds from a relationship between a yaw rate $\gamma$ and lateral acceleration rate ($d^2y/dt^2$) occurring due to vehicle movement, by the vehicle's position and motion characteristics of the vehicle itself, that is, by a front wheel steering angle $\delta$ occurring when a steering torque T is applied to the steering mechanism 41 during traveling at a vehicle speed V, gives a steering angle command that makes the lateral displacement to yt after $\Delta t$ seconds to the EPS controller 31 via the LKA controller 15, and gives a speed command that makes the speed to Vt after $\Delta t$ seconds to the ACC controller 14.

Although the ACC controller 14, LKA controller 15, EPS controller 31, engine controller 32, and ESP/ABS controller 33 operate independently of automatic steering, they are also operable according to command input from the automated driving controller 10 while a partially automated in-lane driving function (PADS) and a partially automated lane change system (PALS) are operating.

The ESP/ABS controller 33 that has received a deceleration command from the ACC controller 14 controls the vehicle speed by outputting a hydraulic command to the actuator and controlling the braking force of the brake 43. Also, the engine controller 32 that has received an acceleration/deceleration command from the ACC controller 14 controls the vehicle speed by controlling the actuator output (throttle position) to thereby issue a torque command to the engine 42 and control the driving force.

The ACC function (ACCS) functions with combination of hardware and software, such as the millimeter wave radar as the front detection means 211 included in the external sensor 21, ACC controller 14, engine controller 32, and ESP/ABS controller 33.

That is, in a case in which there is no vehicle ahead, the ACC function performs constant speed cruising by setting an ACC set speed (set speed) as the target vehicle speed; and in a case of having caught up with the vehicle ahead (in a case in which a speed of the vehicle ahead is equal to or slower than the ACC set speed), the ACC function performs following cruise to the vehicle ahead while maintaining an inter-vehicle distance (set inter-vehicle distance) corresponding to a time gap (inter-vehicle time = inter-vehicle distance / speed of vehicle) set in accordance with the speed of the vehicle ahead.

The LKA function (LKAS) detects the lane markings and the vehicle's own position by the environmental condition estimating part 11 of the automated driving controller 10 on the basis of image data obtained by the external sensor 21 (cameras 212 and 215), and performs steering control by the EPS controller 31 via the LKA controller 15 so as to be able to drive at a center of a lane.

That is, the EPS controller 31 that has received the steering angle command from the LKA controller 15 refers to a vehicle speed-steering angle-steering torque map, issues a torque command to an actuator (EPS motor), and gives a front wheel steering angle targeted by the steering mechanism 41.

The partially automated in-lane driving system (PADS) is implemented by combining longitudinal control (speed control and inter-vehicle distance control) by the ACC controller 14 and lateral control (steering control and lane keeping driving control) by the LKA controller 15 as described above.

Overview of Automated Lane Keeping System

Next, an overview of the automated lane keeping system (ALKS) will be described assuming a state of partially automated in-lane driving on an expressway.

The automated lane keeping system (ALKS) is a system combining the inter-vehicle distance control system (ACCS) and the lane keeping assistance system (LKAS) in the same way as the partially automated in-lane driving system (PADS) described above, and is executed in a state in which both ACC controller 14 included in the inter-vehicle distance control system (ACCS) and the LKA controller 15 included in the lane keeping assistance system (LKAS) are operating together with the automated driving controller 10, but can only be executed in a speed range of 60 km/h or less.

The automated lane change function is stopped while the automated lane keeping system (ALKS) is active, and automated driving is executed while maintaining a single lane. In addition to the above, the automated lane keeping system (ALKS) can be executed when the driver status monitor confirms that the driver has responded to the takeover request and can take over driving, as long as the driver is seated in the driver's seat and the seatbelt is fastened, the driver is not required to monitor the driving situation.

Since the minimum speed is set at 50 km/h on the highway, shift from the partially automated in-lane driving (PADS driving) to the automated lane keeping system (ALKS) is performed when the vehicle speed falls to 50 km/h or less due to congestion on the road substantially in a state of following cruise to the vehicle ahead by partially automated in-lane driving (PADS driving) or when, e.g., the vehicle catches up to the vehicle ahead that is driving at 50 km/h or less due to congestion.

System State Monitoring

While the automated driving system (PADS, ALKS) is active, the environmental condition estimating part 11 constantly monitors whether the driving state and surrounding environmental condition of the vehicle and the driver's state are maintained within an operational design domain (ODD) of the system on the basis of the external information obtained through the external sensor 21, the vehicle information obtained by the internal sensor 22, and road information (icy road information) obtained by an I2V receiver 26.

When the environmental condition estimating part 11 determines that automated driving cannot be continued stably, such as when a system operating condition is determined to have deviated, or when a system abnormality or failure is detected, the driver is notified of an operation takeover request (TD: transition demand).

When the driver takes over driving operation within a predetermined time (for example, ten seconds) from the operation takeover request (TD), operation shifts from the partially automated in-lane driving to manual driving. Operation takeover by the driver is detected by hands-on detection using a steering wheel grasp sensor, an override by the driver to be described later, the operation of a stop switch by the driver, driver status monitoring, or the like.

Risk Minimization Control When Operation Takeover Not Performed

When the driving operation is not taken over within the predetermined time, minimal risk maneuver (MRM) is activated and risk minimization control is performed. The minimal risk maneuver (MRM) refers to a function for automatically shifting to a minimal risk condition when the driver cannot take over the operation, although a change in the external driving environment or a failure or the like in the system has occurred and the driver is notified of the operation takeover request (TD), and specifically, includes control to evacuate to the shoulder according to automated steering by the automated driving controller 10 or to decelerate to a stop in the lane (safe stop).

Override Function

The automated driving system as described above enables an override due to an operation intervention by the driver while the partially automated in-lane driving system (PADS) or automated lane keeping system (ALKS) is active, or while the minimal risk maneuver (MRM) is active.

That is, the longitudinal control system (ACCS) is overridden when an engine torque request by the driver's accelerator pedal operation or a deceleration request by a brake pedal operation is equal to or greater than respective override threshold values. These override threshold values are set to an amount of accelerator control input (engine torque command value) or brake control input (EPS hydraulic command value) at which the driver is determined to have intentionally performed an acceleration/deceleration operation, and both are set according to acceleration/deceleration characteristics of the vehicle and the driving state.

The lateral control system (LKAS) is overridden when a steering torque by the driver's manual steering 34 is equal to or greater than an override threshold value. The override threshold value for the steering intervention is set according to the steering characteristics of the vehicle and the driving state.

When the override (control override) due to the acceleration/deceleration operation intervention or the override (steering override) due to the steering intervention is executed, each automated driving function described above is stopped and operation shifts to manual driving by the driver.

In addition, as described above, if the driving conditions of the vehicle deviate from the operational design domain (ODD) of the system while the automated lane keeping system (ALKS) is active, an operation takeover request (TD) is issued to the driver and operation shifts to manual driving by the driver, but as already mentioned, if the reason for the operational design domain (ODD) deviation is an icy road and there is not enough time until the icy road spot reached, operations by the driver in response to the operation takeover request may induce vehicle behavior such as skidding or spinout.

Control During Icy Road Detection

Accordingly, the automated driving controller 10 according to the present invention is configured to shift to safety measures depending on the time until arrival at an icy road spot when an icy road is detected while the automated lane keeping system (ALKS) is active.

The environmental condition estimating part 11 includes a time to arrival calculating part that calculates the time to arrival (TTA) at a road information spot (icy road spot) on the basis of the current location and speed of the vehicle 1 when road information (icy road information) detected by sensors on the road infrastructure side (for example, infrastructure sensors such as outdoor air thermometers, road surface thermometers, and icy road sensors) is obtained by the I2V receiver 26 or the like, in relation to a path specified as a global path or a tentative global path set in the path generating part 12.

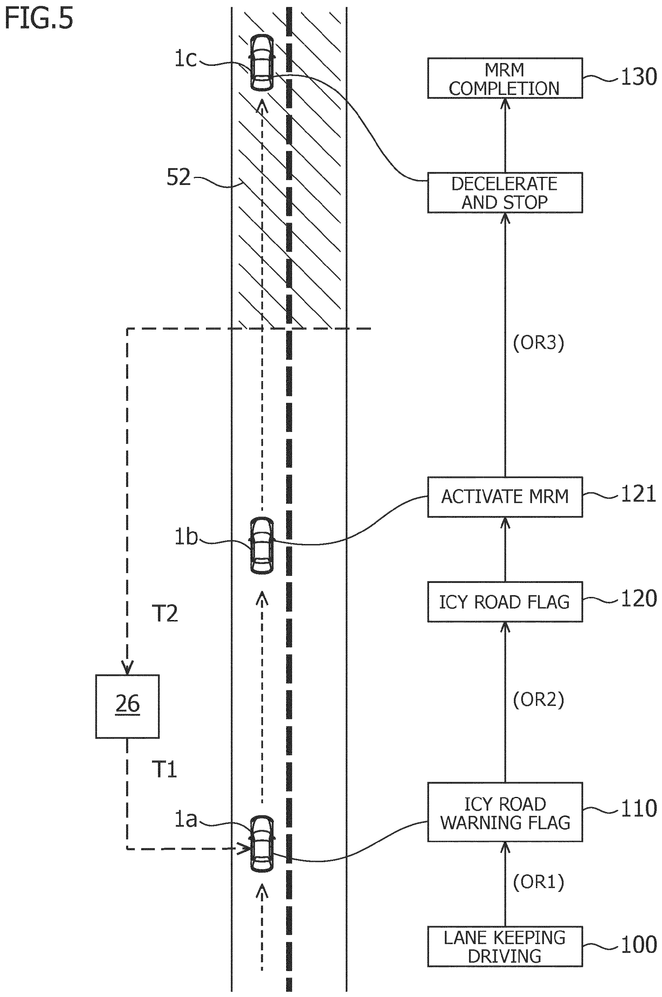

As illustrated in Figure 5, if the time to arrival (TTA) at an icy road spot (52) is less than a predetermined time T1 (for example, 12 seconds, taking into account handover to the driver) judged to be sufficient for avoidance or safe stopping by manual control before reaching the icy road spot, the automated driving controller 10 raises an icy road flag (120), activates the minimal risk maneuver (MRM) (121), performs the risk minimization control, and shifts to a best-effort strategy utilizing the safe stop function of the automated driving system and the vehicle behavior stabilization control system.

On the other hand, if the time to arrival (TTA) is equal to or greater than the predetermined time T1, an icy road warning (110) and an operation takeover request (TD) are issued to the driver, similarly to when an ODD deviation other than icy road occurs, and if driving operations are taken over within a predetermined time (for example, 10 seconds), automated lane keeping driving shifts to manual driving. If the driving operation takeover is not performed within the predetermined time, minimal risk maneuver (MRM) is activated and operation shifts to the risk minimization control.

However, in the case in which the time to arrival (TTA) is relatively short, even if assumed to be equal to or greater than the predetermined time T1, and the predetermined time (10 seconds) elapses without the driving operation takeover being performed, the remaining time will be short and a large braking force will be necessary to come to a stop before reaching the icy road spot. Accordingly, after shifting to the operation takeover request (TD) when the time to arrival (TTA) is equal to or greater than the predetermined time T1, if the time to arrival (TTA) has become less than a second predetermined time T2 (for example, 3-5 seconds), the minimal risk maneuver (MRM) is activated (121) without waiting for the operation takeover, and the risk minimization control is executed.

Override Suppression During Icy Road Detection

An override due to an operation intervention by the driver is available even while the minimal risk maneuver (MRM) is active during icy road detection like the above, and an operation intervention by the driver, being panicked by the shift to risk minimization control, may cause the behavior of the vehicle 1 to be unstable after the risk minimization control ends.

Accordingly, in the case of shifting to the risk minimization control when the time to arrival (TTA) at an icy road spot is less than the predetermined time T1, the control override threshold values and steering override threshold value are changed to values (OR3) which are greater than normal (OR1), thereby suppressing an override by the driver to allow for a reliable shift to the risk minimization control.

Also, in the case of shifting to an icy road warning and an operation takeover request (TD) when the time to arrival (TTA) at an icy road spot is equal to or greater than the predetermined time T1, the control override threshold values and steering override threshold value are changed to greater-than-normal values (OR2), and at the same time, detection of accelerator/brake operations and steering operations is enabled to perform takeover determination, thereby allowing for a quick operation takeover while preventing excessive operation intervention by a driver panicked by an icy road warning. Note that if an excessive operation is detected, the driver may be notified that such is the case by spoken warnings or the like. Also, the automated driving functions may be gradually reduced and shifted to manual driving after a takeover determination.

To summarize, as indicated in the following Table 1, given override threshold values OR2 (accelerator override threshold value $OE_{TD}$, brake override threshold value $OP_{TD}$, steering override threshold value $OT_{TD}$) in the event of an ice warning and takeover request and override threshold values OR3 (accelerator override threshold value $OE_{MR}$, brake override threshold value $OP_{MR}$, steering override threshold value $OT_{MR}$) in the event of MRM activation with respect to normal override threshold values OR1 (accelerator override threshold value $OE_D$, brake override threshold value $OP_D$, steering override threshold value $OT_D$), the threshold values are set such that

$$\text{Normal (OR1)} < \text{Takeover request (OR2)} \leq \text{MRM activation (OR3)}$$

holds true for each.

Table 1

| | Override threshold values | | |
| --- | --- | --- | --- |
| | Accelera-tor | Brake | Steering |
| Normal | $OE_D$ | $OP_D$ | $OT_D$ |
| Takeover request | $OE_{TD}$ | $OP_{TD}$ | $OT_{TD}$ |
| MRM activation | $OE_{MR}$ | $OP_{MR}$ | $OT_{MR}$ |

Override Suppression Considering Road Grade at Icy Road Spot

Road structural factors that make driving on an icy road surface more difficult include the case of a longitudinal slope (upward slope, downward slope) and a transverse slope compared to flat roads. In particular, a longitudinal slope in relation to acceleration/deceleration and transverse slope in relation to steering direction are factors that affect the difficulty of driving successfully on an icy road surface.

Accordingly, by treating the override threshold value settings described above as a basis and setting override threshold values adjusted according to the road grade as described below, an override on a road grade that makes for difficult travel by manual driving can be suppressed, and a shift to the risk minimization control can be performed reliably.

That is, as illustrated in the following Table 2 (top), on a longitudinal slope, the accelerator override threshold value and the brake override threshold value are set to different values for a downward slope and an upward slope. The steering override threshold value may be set similarly. Additionally, this adjustment can also be applied to the normal override threshold values. Basically, each threshold value is set such that Threshold value on upward slope road surface < Threshold value on downward slope road surface holds true for each, and an override on a downward slope road surface is suppressed further.

Furthermore, as illustrated in the following Table 2 (bottom), the steering override threshold value is set to different values for a leftward transverse slope road surface and a rightward transverse slope road surface in relation to the steering direction. Basically, each threshold value is set such that

Right steering override threshold value:

Threshold value on rightward transverse slope road surface > Threshold value on leftward transverse slope road surface

Left steering override threshold value:

Threshold value on leftward transverse slope road surface > Threshold value on rightward transverse slope road surface

hold true for each, and a steering override in the transverse slope direction is suppressed further. This adjustment likewise can be applied to the normal override threshold values.

Table 2

| Override threshold values | Downward slope | | | Upward slope | | |
|---|---|---|---|---|---|---|
| | Accelera-tor | Brake | Steering | Accelera-tor | Brake | Steer-ing |
| Normal | $OE_{DD}$ | $OP_{DD}$ | $OT_{DD}$ | $OE_{DU}$ | $OP_{DU}$ | $OT_{DU}$ |
| Takeover request | $OE_{TDD}$ | $OP_{TDD}$ | $OT_{TDD}$ | $OE_{TDU}$ | $OP_{TDU}$ | $OT_{TDU}$ |
| MRM activation | $OE_{MRD}$ | $OP_{MRD}$ | $OT_{MRD}$ | $OE_{MRU}$ | $OP_{MRU}$ | $OT_{MRU}$ |

| Override threshold values | Leftward transverse slope | | | Rightward transverse slope | | |
|---|---|---|---|---|---|---|
| | Accelerator | Brake | Steer-ing | Accelerator | Brake | Steering |
| Normal | $OE_D$ | $OP_D$ | $OT_{DL}$ | $OE_D$ | $OP_D$ | $OT_{DR}$ |
| Takeover request | $OE_{TD}$ | $OP_{TD}$ | $OT_{TDL}$ | $OE_{TD}$ | $OP_{TD}$ | $OT_{TDR}$ |
| MRM activation | $OE_{MR}$ | $OP_{MR}$ | $OT_{MRL}$ | $OE_{MR}$ | $OP_{MR}$ | $OT_{MRR}$ |

Override Suppression Considering Strong Winds at Icy Road Spot

Environmental factors that make driving on an icy road surface more difficult include the case in which strong winds are blowing compared to no wind or light wind conditions. By setting the left/right steering override threshold values to different values in relation to the wind direction, that is, a crosswind from the left/right, and by setting the accelerator override threshold value and brake override threshold value to different values in relation to tailwind/headwind, an override can be suppressed under strong wind conditions that make for difficult travel by manual driving, and a shift to the risk minimization control can be performed reliably.

That is, as illustrated in the following Table 3 (top), under strong wind conditions of a crosswind from the left/right, each threshold value is set such that

Left steering override threshold value:

$$\text{Threshold value for crosswind from right} > \text{Threshold value for crosswind from left}$$

Right steering override threshold value:

Threshold value for crosswind from left > Threshold value for crosswind from right hold true, and a steering override in the same direction as the crosswind is suppressed further.

Furthermore, as illustrated in the following Table 3 (bottom), under strong wind conditions of a tailwind or a headwind, each threshold value is set such that

Accelerator override threshold value:

$$\text{Threshold value for tailwind} > \text{Threshold value for headwind}$$

Brake override threshold value:

$$\text{Threshold value for tailwind} < \text{Threshold value for headwind}$$

hold true, and an acceleration/deceleration override in the downwind direction ahead or behind is suppressed further.
Note that the above adjustment likewise can be applied to the normal override threshold values.

Table 3

| Override threshold values | Crosswind from left | | | | Crosswind from right | | | |
|---|---|---|---|---|---|---|---|---|
| | Accelerator | Brake | Left steering | Right steering | Accelerator | Brake | Left steering | Right steering |
| Normal | $OE_{DD}$ | $OP_{DD}$ | $OT_{DLL}$ | $OT_{DRL}$ | $OE_{DD}$ | $OP_{DD}$ | $OT_{DLR}$ | $OT_{DRR}$ |
| Takeover request | $OE_{TDD}$ | $OP_{TDD}$ | $OT_{TDLL}$ | $OT_{TDRL}$ | $OE_{TDD}$ | $OP_{TDD}$ | $OT_{TDLR}$ | $OT_{TDRR}$ |
| MRM activation | $OE_{MRD}$ | $OP_{MRD}$ | $OT_{MRLL}$ | $OT_{MRRL}$ | $OE_{MRD}$ | $OP_{MRD}$ | $OT_{MRLR}$ | $OT_{MRRR}$ |
| | | | | | | | | |
| Override threshold values | Tailwind | | | | Headwind | | | |
| | Accelerator | Brake | Left steering | Right steering | Accelerator | Brake | Left steering | Right steering |
| Normal | $OE_{DF}$ | $OP_{DF}$ | $OT_{DLF}$ | $OT_{DRF}$ | $OE_{DO}$ | $OP_{DO}$ | $OT_{DLO}$ | $OT_{DRO}$ |
| Takeover request | $OE_{TDF}$ | $OP_{TDF}$ | $OT_{TDLF}$ | $OT_{TDRF}$ | $OE_{TDO}$ | $OP_{TDO}$ | $OT_{TDLO}$ | $OT_{TDRO}$ |
| MRM activation | $OE_{MRF}$ | $OP_{MRF}$ | $OT_{MRLRF}$ | $OT_{MRRF}$ | $OE_{MRO}$ | $OP_{MRO}$ | $OT_{MRLO}$ | $OT_{MRRO}$ |

Control Flow During Icy Road Detection While Automated Lane Keeping System is Active

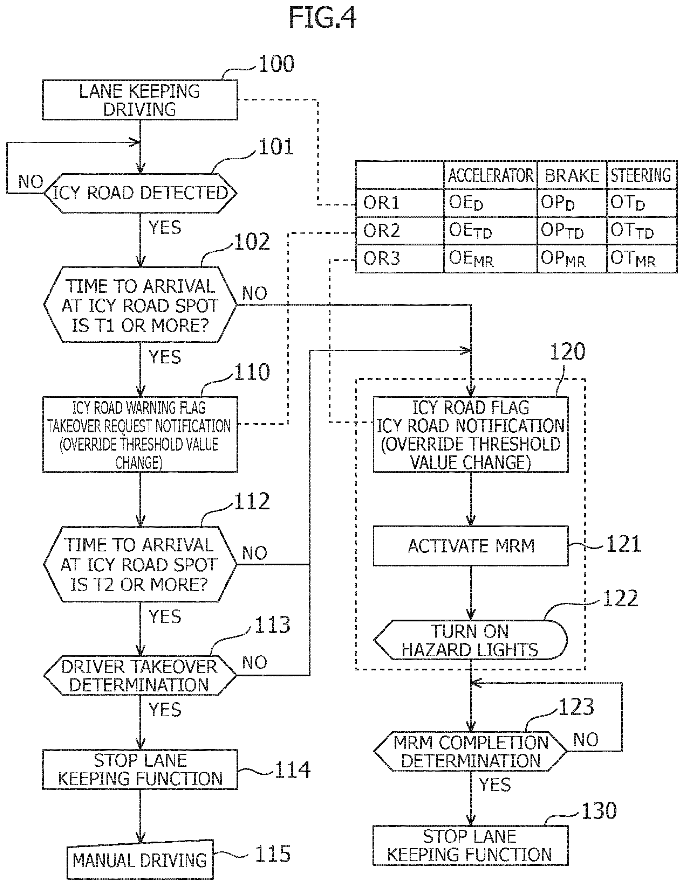

Next, a control flow (Figure 4) during icy road detection while the automated lane keeping system is active will be described. Note that in the following example, threshold value adjustment with consideration for road gradient and strong winds is not included, and control in conditions of a flat road with no wind or light wind is described.

(1) Automated Lane Keeping System (ALKS) Activation

When the vehicle speed falls to 60 km/h or less in a state of following cruise to a vehicle ahead by the partially automated in-lane driving (PADS driving) and an activation condition is met, operation shifts to the automated lane keeping system (ALKS) (step 100). The system is within the ODD and lane-keeping driving is performed by the automated driving system, but the normal override threshold values OR1 are set, allowing a shift to manual driving if an operation intervention greater than the override threshold values OR1 is made by the driver.

(2) State Monitoring-Icy Road Detection by System

The system is constantly monitored whether the system is within the ODD while the automated lane keeping system (ALKS) is active, and normally an operation takeover request is issued if an event resulting in an ODD deviation is detected, but if icy road information detected by a sensor on the road infrastructure side is obtained by the I2V receiver 26 or the like (step 101; YES), the time to arrival (TTA) at an icy road spot is calculated on the basis of the current location and speed of the vehicle 1.

(3) Icy Road Warning Flag-Operation Takeover Request-Override Threshold Value Change (OR2)

If the time to arrival (TTA) at the icy road spot is the predetermined time T1 (for example, 12 seconds) or more (step 102; YES), an icy road warning flag is raised (step 110), and at the same time, the driver is notified of an icy road warning and an operation takeover request (TD), and a count of a predetermined time (for example, 10 seconds) is started. The icy road warning and operation takeover request are issued through display and sound by HMI devices in the vehicle 1. At the same time, the override threshold values serving as the determination criteria for an operation intervention by the driver are changed to values (OR2) which are greater than normal (OR1) for only a short time (for example, 2 seconds).

(4) Driver Takeover Determination

The calculation of the time to arrival (TTA) at the icy road spot continues during the operation takeover request, and if the time to arrival (TTA) is the predetermined time T1 or more (step 112; YES) and a driving operation takeover is confirmed by hands-on detection or the like before a predetermined time (for example, 10 seconds) for takeover determination elapses (step 113; YES), the automated lane keeping function stops (step 114), and operation shifts to manual driving (step 115).

(5) Icy Road Flag-Override Threshold Value Change (OR3)

On the other hand, when icy road information is acquired (step 101; YES), if the time to arrival (TTA) at the icy road spot is less than the predetermined time T1 (for example, 12 seconds) (step 102; NO), the icy road flag is raised and an icy road notification is issued (step 120). At the same time, the override threshold values serving as the determination criteria for an operation intervention by the driver are changed to values (OR3) which are greater than normal (OR1).

(6) Risk Minimization Control (MRM)

At the same time, the minimal risk maneuver (MRM) is activated (step 121) and operation shifts to the risk minimization control. That is, while flashing the hazard lights (step 122), the vehicle is decelerated to a stop in the lane at a prescribed deceleration rate (4.0 m/s$^2$ or less).

(7) MRM Completion Determination-Lane Keeping Function Stop

Completion is determined only if the system becomes inactive or if the system has stopped the vehicle (step 123; YES), and the lane keeping function is stopped (step 130).

(8) Time to Arrival Elapses During Operation Takeover Request

Note that, after the icy road warning and operation takeover request (TD) are issued in step 110, if the time to arrival (TTA) at the icy road spot becomes less than a predetermined time T2 (for example, 5 seconds) before the predetermined time (for example, 10 seconds) for takeover determination elapses (step 112; NO), operation shifts to steps 120-122 without waiting for the elapse of the predetermined time for takeover determination, and the minimal risk maneuver (MRM) is activated with the icy road notification and override threshold value change (OR3).

(9) Operation Takeover Failure During Operation Takeover Request

Also, after the icy road warning and operation takeover request (TD) are issued in step 110, if operation has not been taken over by the driver after the predetermined time (for example, 10 seconds) for takeover determination elapses while the time to arrival (TTA) at the icy road spot is the predetermined time T2 (for example, 5 seconds) or more (step 113; NO), operation shifts to steps 120-122 and the minimal risk maneuver (MRM) is activated with the override threshold value change (OR3), without issuing the icy road notification.

(10) Determination of Whether Override has Occurred While MRM is Active

The determination of whether an override has occurred continues while the risk minimization control (MRM) is active, and if a steering intervention equal to or greater than a steering override threshold value Sm, an accelerator operation intervention equal to or greater than an accelerator override threshold value Tm, or a brake operation intervention equal to or greater than a brake override threshold value Pm is detected (or if the system is stopped through operation of a switch by the driver), the automated lane keeping system (ALKS) is stopped and operation shifts to manual driving.

Other Embodiments

The above embodiment describes the case of using a sensor (infrastructure sensor) on the road infrastructure side and the I2V receiver 26 as icy road detecting means, but a configuration that detects road surface conditions (icy road) with an in-vehicle sensor (standalone sensor) can also be adopted.

However, since the icy road that is detectable by an in-vehicle sensor (standalone sensor) is limited to that which is a relatively short distance from the vehicle 1, in the case in which icy road is detected by an in-vehicle sensor (standalone sensor), operation shifts to steps 120-122 immediately and the minimal risk maneuver (MRM) is activated with the icy road notification and override threshold value change (OR3), similarly to the case of "Time to Arrival Elapses During Operation Takeover Request" in (8) above.

Operation and Effects

As described in detail above, a driving control apparatus for a vehicle according to an embodiment of the present invention is advantageous in that if an icy road on the driving path ahead of the vehicle is detected while the in-lane automated driving function (ALKS) is active and the time to arrival (TTA) at an icy road spot is less than a predetermined time sufficient for avoidance or safe stopping by manual control before reaching the icy road spot (TTA<T1), the override threshold values which serve as determination criteria for the operation intervention are set to values (OR3) which are greater than normal (OR1) to allow shifting to the risk minimization control (MRM) in a state in which an override due to an operation intervention by the driver is suppressed, and the automated driving functions of the vehicle are used to decelerate the vehicle to a stop in the lane to avoid vehicle behavior such as skidding or spinout.

Also, in the above, if the time to arrival at the icy road spot is equal to or greater than prescribed (TTA≥T1), an icy road warning and operation takeover request (TD) are issued, and operation shifts to manual driving if the driver takes over operation, whereas if the time to arrival becomes less than prescribed (TTA<T2) before the driver takes over operation, the override threshold values which serve as determination criteria for the operation intervention are set to greater-than-normal values (OR3) and the risk minimization control (MRM) is executed, thereby reducing shifts to the risk minimization control (MRM) as much as possible except in emergency cases.

Furthermore, in the above, the override threshold values which serve as determination criteria for the operation intervention as set to greater-than-normal values (OR2) at the same time as the icy road warning (operation takeover request), which is advantageous in preventing an excessive operation intervention by a driver who is panicked by the icy road warning, and allowing operation to be taken over quickly.

As mentioned in the introduction, the tendency for the behavior of a vehicle to become unstable on an icy road surface is more pronounced when the vehicle is fitted with normal tires (summer tires), whereas if the vehicle is fitted with winter tires, including studless tires and all-season tires, the vehicle behavior stabilization control system may be capable of driving successfully on an icy road surface even during manual driving.

Accordingly, the automated driving system can also be configured such that, for example, the environmental condition estimating part 11 is provided with a tire type information storing part that stores information pertaining to whether the tires that the vehicle 1 is fitted with are summer tires (normal tires) or winter tires (studless tires, all-season tires) as vehicle information, a settings part (settings screen) of the automated driving system is equipped with means (a switch or the like) for setting (selecting) the tire type, the setting is stored as tire type information, and during icy road detection, the tire type information is referenced to execute the control during the icy road detection described above selectively according to the tire type.

Although several embodiments of the present invention have been described above, it is noted that the present invention is not limited to the above embodiments, and various further modifications and alterations are possible within the scope of the appended claims.

[Reference Signs List]

| | |
|---|---|
| 10 | Automated driving controller |
| 11 | Environmental condition estimating part |
| 12 | Path generating part |
| 13 | Vehicle control part |
| 14 | ACC controller |
| 15 | LKA controller |
| 21 | External sensor |
| 22 | Internal sensor |
| 26 | I2V receiver |
| 31 | EPS controller |
| 32 | Engine controller |
| 33 | ESP/ABS controller |
| 34 | Manual steering (wheel) |

## Claims

1. A driving control apparatus (10) for a vehicle (1), comprising:

   an environmental condition estimating part (11) including a surrounding recognition function for recognizing a driving lane of the vehicle, neighboring lanes, other vehicles in each of the lanes, and a surrounding environment, and a function for obtaining a state of movement of the vehicle (1);
   a path generating part (12) for generating a target path on the basis of information obtained by the environmental condition estimating part (11); and
   a vehicle control part (13) configured to perform speed control and steering control for making the vehicle (1) follow the target path,

   the driving control apparatus (10) having:

   an in-lane automated driving function that performs in-lane automated driving for maintaining a set speed if no vehicle is present ahead in the lane of the vehicle (1), and maintaining a set inter-vehicle distance if a vehicle is present ahead;
   an MRM function that performs a risk minimization control, including decelerating the vehicle to a stop in the lane, when a system failure occurs while the in-lane automated driving function is active or when operation is not taken over by a driver when a system failure occurs; and
   an override function that, if there is an operation intervention equal to or greater than a prescribed threshold value (OR1) by the driver while the in-lane automated driving function or the MRM function is active, stops the active function and transfers authority to the driver,
   **characterized in that** the driving control apparatus (10) is configured such that if an icy road on a driving path ahead of the vehicle (1) is detected on the basis of information obtained by the environmental condition estimating part (11) and the time to arrival at an icy road spot (52) is less than a prescribed value (T1), the prescribed threshold value (OR1) which serves as a determination criterion for the operation intervention is set to a greater-than-normal value (OR3) and the risk minimization control is performed.

2. The driving control apparatus (10) for a vehicle (1) as claimed in claim 1, configured such that if the icy road is detected and the time to arrival at the icy road spot (52) is equal to or greater than the prescribed value (T1), an icy road warning and an operation takeover request are issued and operation shifts to manual driving if the driver takes over operation, whereas if the time to arrival becomes less than a second prescribed value (T2) before the driver takes over operation, the prescribed threshold value (OR1) which serves as the determination criterion for the operation intervention is set to the greater-than-normal value (OR3), and the risk minimization control is executed.

3. The driving control apparatus (10) for a vehicle (1) as claimed in claim 2, wherein the override function is configured such that the prescribed threshold value (OR1) which serves as the determination criterion for the operation intervention is set to a different greater-than-normal value (OR2) at the same time as the icy road warning.

4. The driving control apparatus (10) for a vehicle (1) as claimed in claim 1 or 2, wherein the override function is configured such that if the icy road on the driving path ahead of the vehicle (1) is detected on the basis of the information acquired by the environmental condition estimating part (11) and the detected spot (52) has a grade equal to or greater than a fixed value, the override threshold values for accelerator operation and brake operation in a downward slope direction are set to greater values than the case of an upward slope direction and the case in which the grade is less than the fixed value.

5. The driving control apparatus (10) for a vehicle (1) as claimed in claim 1 or 2, wherein the override function is configured such that if the icy road on the driving path ahead of the vehicle (1) is detected on the basis of the information acquired by the environmental condition estimating part (11) and the detected spot (52) has a transverse slope equal to or greater than a fixed value, a steering override threshold value in a downward direction is set to a greater value than a steering override threshold value in an upward direction and a steering override threshold value in the case in which the transverse slope is less than the fixed value.

6. The driving control apparatus (10) for a vehicle (1) as claimed in claim 1 or 2, wherein the override function is configured such that if the icy road on the driving path ahead of the vehicle (1) is detected on the basis of the information acquired by the environmental condition estimating part (11) and a crosswind with a wind speed equal to or greater than a fixed value is detected, a steering override threshold value is set to a greater value than the case in which the wind speed is less than the fixed value.

7. The driving control apparatus (10) for a vehicle (1) as claimed in claim 1 or 2, wherein

the environmental condition estimating part (11) includes a function of storing, as vehicle information, tire type information pertaining to whether tires that the vehicle is fitted with are summer tires or winter tires, and
if the tire type is summer tires, the driving control apparatus (10) executes control for the case in which the icy road is detected, and if the tire type is winter tires, the driving control apparatus (10) issues the icy road warning only.

## Patentansprüche

1. Fahrtsteuervorrichtung (10) für ein Fahrzeug (1), umfassend:

ein Umweltbedingung-Schätzungsteil (11), welches eine Umgebungserkennungsfunktion zum Erkennen einer Fahrtspur des Fahrzeugs, benachbarter Spuren, anderer Fahrzeuge in jeder der Spuren und einer Umgebungsumwelt umfasst, und eine Funktion zum Erhalten eines Zustands einer Bewegung des Fahrzeugs (1);
ein Wegerzeugungsteil (12) zum Erzeugen eines Zielweges auf Grundlage von Informationen, welche durch das Umweltbedingung-Schätzungsteil (11) erhalten sind; und
ein Fahrzeugsteuerteil (13), welches dazu eingerichtet ist, eine Geschwindigkeitssteuerung und eine Lenksteuerung durchzuführen, um ein Folgen des Zielweges des Fahrzeugs (1) auszuführen,
wobei die Fahrtsteuervorrichtung (10) aufweist:

eine automatische In-Spur-Fahrtfunktion, welche ein automatisches In-Spurfahren durchführt, um eine festgesetzte Geschwindigkeit beizubehalten, wenn kein Fahrzeug voraus in der Spur des Fahrzeugs (1) vorzufinden ist und um eine festgesetzte Zwischenfahrzeugdistanz beizubehalten, wenn ein Fahrzeug voraus vorzufinden ist;
eine MRM-Funktion, welche eine Risikominimierungssteuerung durchführt, welche ein Verlangsamen des Fahrzeugs zu einem Stoppen in der Spur umfasst, wenn ein Systemausfall stattfindet, während dem die automatische In-Spur-Fahrtfunktion aktiv ist oder wenn eine Betätigung nicht durch einen Fahrer übernommen wird, wenn ein Systemausfall stattfindet; und
eine Überschreibfunktion, welche, wenn eine Betätigungsintervention gleich oder größer als ein festgeschriebener Schwellenwert (OR1) durch den Fahrer besteht, während die automatische In-Spur-Fahrtfunktion oder die MRM-Funktion aktiv ist, die aktive Funktion stoppt und eine Berechtigung auf den Fahrer überträgt,
dadurch gekennzeichnet, dass die Fahrtsteuervorrichtung (10) derart eingerichtet ist, dass, wenn eine vereiste Straße auf einem Fahrtweg vor dem Fahrzeug (1) auf Grundlage von Informationen detektiert ist, welche durch das Umweltbedingung-Schätzungsteil (11) erhalten sind, und die Ankunftszeit an einem vereisten Straßenort (52) kleiner als ein festgeschriebener Wert (T1) ist, der festgeschriebene Schwellenwert (OR1), welcher als ein Bestimmungskriterium für die Betätigungsintervention dient, zu einem größer-als-normal Wert (OR3) festgelegt ist und die Risikominimierungssteuerung durchgeführt ist.

2. Fahrtsteuervorrichtung (10) für ein Fahrzeug (1) nach Anspruch 1, welche derart eingerichtet ist, dass, wenn die vereiste Straße detektiert ist und die Ankunftszeit an dem vereisten Straßenort (52) gleich oder größer als der festgeschriebenen Wert (T1) ist, eine vereiste Straßenwarnung und eine Betätigungsübernahmeanfrage ausgegeben sind und eine Betätigung auf ein manuelles Fahren übergeht, wenn der Fahrer eine Betätigung übernimmt, wobei, wenn die Ankunftszeit kleiner als ein zweiter festgeschriebener Wert (T2) ist, bevor der Fahrer eine Betätigung übernimmt, der festgeschriebene Schwellenwert (OR1), welcher als das Bestimmungskriterium für die Betätigungsintervention dient, auf den größer-als-normal Wert (OR3) festgelegt ist, und die Risikominimierungssteuerung ausgeführt ist.

3. Fahrtsteuervorrichtung (10) für ein Fahrzeug (1) nach Anspruch 2, wobei die Überschreibfunktion derart eingerichtet ist, dass der festgeschriebene Schwellenwert (OR1), welcher als das Bestimmungskriterium für die Betätigungsintervention dient, auf einen unterschiedlichen größer-als-normal Wert (OR2) festgelegt ist, zu der gleichen Zeit wie die vereiste Straßenwarnung.

4. Fahrtsteuervorrichtung (10) für ein Fahrzeug (1) nach Anspruch 1 oder 2, wobei die Überschreibfunktion derart eingerichtet ist, dass, wenn die vereiste Straße auf dem Fahrtweg vor dem Fahrzeug (1) auf Grundlage der Informationen detektiert ist, welche durch das Umweltbedingung-Schätzungsteil (11) erhalten sind, und der detektierte Ort (52) einen Grad gleich oder größer als ein fixierter Wert aufweist, die Überschreibschwellenwerte für eine Beschleunigungsbetätigung und eine Bremsbetätigung in einer absteigenden Neigungsrichtung zu größeren Werten festgelegt sind, als der Fall einer ansteigenden Neigungsrichtung und dem Fall, in welchem der Grad geringer als der fixierte Wert ist.

5. Fahrtsteuervorrichtung (10) für ein Fahrzeug (1) nach Anspruch 1 oder 2, wobei die Überschreibfunktion derart eingerichtet ist, dass, wenn die vereiste Straße auf dem Fahrtweg vor dem Fahrzeug (1) auf Grundlage der Informationen detektiert ist, welche durch das Umweltbedingung-Schätzungsteil (11) erhalten sind, und der detektierte Ort (52) eine Querneigung gleich oder größer als ein fixierter Wert aufweist, ein Lenküberschreibungsschwellenwert in einer absteigenden Richtung zu einem größeren Wert festgelegt ist, als ein Lenküberschreibungsschwellenwert in einer aufsteigenden Richtung und als ein Lenküberschreibungsschwellenwert in dem Fall, in welchem die Querneigung geringer als der fixierte Wert ist.

6. Fahrtsteuervorrichtung (10) für ein Fahrzeug (1) nach Anspruch 1 oder 2, wobei die Überschreibfunktion derart eingerichtet ist, dass, wenn die vereiste Straße auf dem Fahrtweg vor dem Fahrzeug (1) auf Grundlage der Informationen detektiert ist, welche durch das Umweltbedingung-Schätzungsteil (11) erhalten sind, und ein Seitenwind mit einer Windgeschwindigkeit von gleich oder größer als ein fixierter Wert detektiert ist, ein Lenküberschreibungsschwellenwert zu einem größeren Wert festgelegt ist, als in dem Fall, in welchem die Windgeschwindigkeit geringer als der fixierte Wert ist.

7. Fahrtsteuervorrichtung (10) für ein Fahrzeug (1) nach Anspruch 1 oder 2, wobei das Umweltbedingung-Schätzungsteil (11) eine Funktion eines Speicherns, als Fahrzeuginformationen, von Reifentypinformationen umfasst, welche betreffen, ob Reifen, mit welchen das Fahrzeug ausgestattet ist, Sommerreifen oder Winterreifen sind, und, wenn der Reifentyp Sommerreifen sind, die Fahrtsteuervorrichtung (10) eine Steuerung für den Fall ausführt, dass die vereiste Straße detektiert ist, und, wenn der Reifentyp Winterreifen sind, die Fahrtsteuervorrichtung (10) nur die vereiste Straßenwarnung ausgibt.

**Revendications**

1. Appareil de commande de conduite (10) pour un véhicule (1), comprenant :

une partie d'estimation de conditions environnementales (11) comportant une fonction de reconnaissance d'alentour permettant de reconnaître une voie de circulation du véhicule, des voies voisines, d'autres véhicules dans chacune des voies et un environnement alentour, et une fonction permettant d'obtenir un état de déplacement du véhicule (1) ;
une partie de génération de trajectoire (12) pour générer une trajectoire cible sur la base d'informations obtenues par la partie d'estimation de conditions environnementales (11) ; et
une partie de commande de véhicule (13) configurée pour effectuer une commande de vitesse et une commande de direction pour faire en sorte que le véhicule (1) suive la trajectoire cible, l'appareil de commande de conduite (10) présentant :

une fonction de conduite automatisée dans la voie qui réalise une conduite automatisée dans la voie permettant de maintenir une vitesse définie si aucun véhicule ne se trouve devant le véhicule dans la voie du véhicule (1) et de maintenir une distance entre véhicules définie si un véhicule se trouve devant le véhicule ; une fonction MRM qui effectue une commande de minimisation de risque, y compris la décélération du véhicule jusqu'à un arrêt dans la voie, lorsqu'une défaillance de système se produit pendant que la fonction de conduite automatisée dans la voie est active ou lorsqu'un conducteur ne prend pas le contrôle du fonctionnement lors d'une défaillance de système ; et
une fonction de prise de contrôle manuelle qui, en cas d'intervention de fonctionnement supérieure ou égale à une valeur seuil prescrite (OR1) par le conducteur pendant que la fonction de conduite automatisée dans la voie ou la fonction MRM est active, arrête la fonction active et transfère le contrôle au conducteur, **caractérisé en ce que** l'appareil de commande de conduite (10) est configuré de sorte que, si une route verglacée dans une voie de conduite devant le véhicule (1) est détectée sur la base d'informations obtenues par la partie d'estimation de conditions environnementales (11) et le temps d'arrivée à un point de route verglacée (52) est inférieur à une valeur prescrite (T1), la valeur seuil prescrite (OR1) qui sert de critère de détermination pour l'intervention de fonctionnement est définie à une valeur supérieure à la normale (OR3) et la commande de minimisation de risque est effectuée.

2.  Appareil de commande de conduite (10) pour un véhicule (1) selon la revendication 1, configuré de sorte que, si la route verglacée est détectée et le temps d'arrivée au point de route verglacée (52) est supérieur ou égal à la valeur prescrite (T1), un avertissement de route verglacée et une demande de prise de contrôle de fonctionnement sont émis et le fonctionnement passe en conduite manuelle si le conducteur prend le contrôle du fonctionnement, alors que, si le temps d'arrivée devient inférieur à une deuxième valeur prescrite (T2) avant que le conducteur ne prenne le contrôle du fonctionnement, la valeur seuil prescrite (OR1) qui sert de critère de détermination pour l'intervention de fonctionnement est définie à la valeur supérieure à la normale (OR3), et la commande de minimisation de risque est exécutée.

3.  Appareil de commande de conduite (10) pour un véhicule (1) selon la revendication 2, dans lequel la fonction de prise de contrôle manuelle est configurée de sorte que la valeur seuil prescrite (OR1) qui sert de critère de détermination pour l'intervention de fonctionnement soit définie à une valeur supérieure à la normale (OR2) différente en même temps que l'avertissement de route verglacée.

4.  Appareil de commande de conduite (10) pour un véhicule (1) selon la revendication 1 ou 2, dans lequel la fonction de prise de contrôle manuelle est configurée de sorte que, si la route verglacée sur la trajectoire de conduite devant le véhicule (1) est détectée sur la base des informations acquises par la partie d'estimation de conditions environnementales (11) et le point détecté (52) présente une pente supérieure ou égale à une valeur fixée, les valeurs seuils de prise de contrôle manuelle pour l'actionnement d'accélérateur et l'actionnement de frein dans le sens d'une pente descendante sont définies à des valeurs supérieures à celles dans le sens d'une pente ascendante et dans le cas où la pente est inférieure à la valeur fixée.

5.  Appareil de commande de conduite (10) pour un véhicule (1) selon la revendication 1 ou 2, dans lequel la fonction de prise de contrôle manuelle est configurée de sorte que, si la route verglacée sur la trajectoire de conduite devant le véhicule (1) est détectée sur la base des informations acquises par la partie d'estimation de conditions environnementales (11) et le point détecté (52) présente une pente transversale supérieure ou égale à une valeur fixée, une valeur seuil de prise de contrôle manuelle de direction dans une direction descendante est définie à une valeur supérieure à une valeur seuil de prise de contrôle manuelle de direction dans une direction ascendante et une valeur seuil de prise de contrôle manuelle de direction dans le cas où la pente transversale est inférieure à la valeur fixée.

6.  Appareil de commande de conduite (10) pour un véhicule (1) selon la revendication 1 ou 2, dans lequel la fonction de prise de contrôle manuelle est configurée de sorte que, si la route verglacée sur la trajectoire de conduite devant le véhicule (1) est détectée sur la base des informations acquises par la partie d'estimation de conditions environnementales (11) et un vent latéral avec une vitesse de vent supérieure ou égale à une valeur fixée est détecté, une valeur seuil de prise de contrôle manuelle de direction est définie à une valeur supérieure à celle dans le cas où la vitesse du vent est inférieure à la valeur fixée.

7.  Appareil de commande de conduite (10) pour un véhicule (1) selon la revendication 1 ou 2, dans lequel

la partie d'estimation de conditions environnementales (11) comporte une fonction de stockage, sous forme d'informations de véhicule, d'informations de type de pneu indiquant si les pneus montés sur le véhicule sont des pneus été ou des pneus hiver, et si le type de pneu est des pneus été, l'appareil de commande de conduite (10) exécute la commande pour le cas où la route verglacée est détectée et, si le type de pneu est des pneus hiver, l'appareil de commande de conduite (10) émet uniquement l'avertissement de route verglacée.

# FIG.1

FIG.2

# FIG.3

EP 4 393 785 B1

## FIG.4

|  | ACCELERATOR | BRAKE | STEERING |
|---|---|---|---|
| OR1 | $OE_D$ | $OP_D$ | $OT_D$ |
| OR2 | $OE_{TD}$ | $OP_{TD}$ | $OT_{TD}$ |
| OR3 | $OE_{MR}$ | $OP_{MR}$ | $OT_{MR}$ |

**100** — LANE KEEPING DRIVING

**101** — ICY ROAD DETECTED — NO / YES

**102** — TIME TO ARRIVAL AT ICY ROAD SPOT IS T1 OR MORE? — NO / YES

**110** — ICY ROAD WARNING FLAG TAKEOVER REQUEST NOTIFICATION (OVERRIDE THRESHOLD VALUE CHANGE)

**112** — TIME TO ARRIVAL AT ICY ROAD SPOT IS T2 OR MORE? — NO / YES

**113** — DRIVER TAKEOVER DETERMINATION — NO / YES

**114** — STOP LANE KEEPING FUNCTION

**115** — MANUAL DRIVING

**120** — ICY ROAD FLAG ICY ROAD NOTIFICATION (OVERRIDE THRESHOLD VALUE CHANGE)

**121** — ACTIVATE MRM

**122** — TURN ON HAZARD LIGHTS

**123** — MRM COMPLETION DETERMINATION — NO / YES

**130** — STOP LANE KEEPING FUNCTION

20

FIG.5

| | |
|---|---|
| 1c | MRM COMPLETION ~130 |
| 52 | DECELERATE AND STOP |
| | (OR3) |
| | ACTIVATE MRM ~121 |
| 1b | ICY ROAD FLAG ~120 |
| T2 | (OR2) |
| 26 | |
| T1 | ICY ROAD WARNING FLAG ~110 |
| 1a | (OR1) |
| | LANE KEEPING DRIVING ~100 |

**EP 4 393 785 B1**

**REFERENCES CITED IN THE DESCRIPTION**

**Patent documents cited in the description**

- EP 4052982 A1
- US 2022281456 A1
- GB 2578915 A
- EP 3287334 A2